# EUROPÄISCHE PATENTSCHRIFT

(11) **EP 4 335 407 B1**
(45) Veröffentlichungstag und Bekanntmachung des Hinweises auf die Patenterteilung: **05.11.2025**
(21) Anmeldenummer: 22194872.2
(22) Anmeldetag: 09.09.2022
(51) Int. Cl.: A61C 13/00, A61C 13/08, A61C 13/083

(54) **VERFAHREN ZUM HERSTELLEN EINER DENTALEN RESTAURATION**
METHOD FOR PRODUCING A DENTAL RESTORATION
PROCÉDÉ DE FABRICATION D'UNE RESTAURATION DENTAIRE

(43) Veröffentlichungstag der Anmeldung: 13.03.2024
(73) Patentinhaber: Ivoclar Vivadent AG, 9494 Schaan (LI)
(72) Erfinder: Gassner, Sebastian, 9497 Triesenberg (LI); Mathis, Nina, 9491 Ruggell (LI); Tiefenthaler, Louis, 9497 Triesenberg (LI); Schmid, Fabian, 6751 Braz (AT)
(74) Vertreter: Baldus, Oliver

(56) Entgegenhaltungen:
- CN-B- 101 803 958
- US-A- 5 910 273
- US-A1- 2007 077 534
- US-A1- 2020 170 753
- US-A1- 2020 368 116

## Beschreibung

Die vorliegende Erfindung betrifft Verfahren zum Herstellen einer dentalen Restauration und eine Herstellungsvorrichtung zum Herstellen einer dentalen Restauration.

Dentale Restaurationen können aus einem Rohling herausgefräst werden. Nach dem Ende des Fräsprozesses bleiben diese über Haltestege mit dem Rohling verbunden. Eine Reduktion der Haltestege führt zu einer instabilen Verbindung zum Rohling. Die manuelle Nacharbeit zum Entfernen der dentalen Restauration aus dem Rohling erfordert Zeit und Geschicklichkeit. Weiter entsteht das Problem, dass die manuelle Nacharbeit der dentalen Restauration deren Geometrie ungewollt verändern kann. Auch eine manuelle Befestigung der dentalen Restauration mittels geschmolzenen Wachses ist zeit- und arbeitsintensiv. Auch eine Oberflächenbearbeitung ist zeitintensiv und bei manuellen Prozessen hängt das Ergebnis von der Qualifikation des Benutzers ab. Zudem schränken Konstruktionsrichtlinien den Benutzer in der Gestaltung der dentalen Restauration ein und angepasste Bearbeitungsparameter führen nur teilweise ans Ziel.

Eine Reinigung mittels Pinsel ist zum einen arbeitsintensiv. Zum anderen ist es schwer zu beurteilen, ob die Reinigungswirkung hoch genug ist. Staubrückstände, die sich einfacher vor einem Sintern entfernen lassen, werden jedoch oft erst nach dem Sintern erkennbar. Eine Nassbearbeitung der dentalen Restauration führt zu Problemen mit der Verunreinigung des Materials und macht eine Trocknungsphase vor dem Sinterprozess notwendig.

Es ist die technische Aufgabe der Erfindung, die Herstellung einer dentalen Restauration zu vereinfachen.

Das Dokument US2020/368116 offenbart einen mit einer organischen Verbindung gefüllten Keramikrohling mit verbesserten Bearbeitungseigenschaften.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Herstellen einer dentalen Restauration gelöst, mit den Schritten eines Herstellens der dentalen Restauration in einer Anfangsgeometrie, die gegenüber der herzustellenden Endgeometrie ein Überschussvolumen aufweist; eines Infiltrierens der Anfangsgeometrie mit einem Einbettmaterial; und eines Entfernens des Überschussvolumens mit dem Einbettmaterial, um die Endgeometrie zu erzeugen. Die Anfangsgeometrie kann das Überschussvolumen teilweise oder ganz gegenüber der herzustellenden Endgeometrie aufweisen. Das Überschussvolumen und/oder das Einbettmaterial können teilweise oder ganz entfernt werden, um die Endgeometrie zu erzeugen. Nach dem Fräsen der dentalen Restauration brauchen keine verbundenen Haltestege an einem Rohling manuell getrennt zu werden. Die gefrästen Oberflächen der dentalen Restauration verfügen über eine glatte Struktur, die nicht manuell nachgearbeitet und poliert werden muss. Mit dem Verfahren können filigrane Strukturen, wie Veeners und Inlays, hergestellt werden, auch wenn Aufgrund von Material-, Werkzeug- und Prozesseigenschaften bei spröden Materialien ein erhöhtes Chippingrisiko besteht. Das Anlagern von Staubrückständen in den Poren und auf der Oberfläche kann verhindert werden, die bei einem anschließenden Sinterprozess

zu Problemen und einem hohen Reinigungs- oder Nacharbeitsaufwand führen. Zudem wird die manuelle Nacharbeit reduziert. Das Verfahren verhindert, dass Staubrückstände entstehen, insbesondere in den Fissuren, die manuell schwer zu polieren oder reinigen sind.

In einer technisch vorteilhaften Ausführungsform des Verfahrens wird das Einbettmaterial ausgehärtet. Das Aushärten kann mittels Lichts oder thermisch erfolgen. Dadurch wird beispielsweise der technische Vorteil erreicht, dass sich die Bearbeitungsfähigkeit verbessert.

In einer weiteren technisch vorteilhaften Ausführungsform des Verfahrens werden Fräsreste beim Herstellen einer Endgeometrie und/oder Entfernen des Überschussvolumens abgesaugt, gepinselt oder abgeblasen. Dadurch wird beispielsweise der technische Vorteil erreicht, dass Fräsreste beim Sintern keine Probleme bereiten.

In einer weiteren technisch vorteilhaften Ausführungsform des Verfahrens wird das Überschussvolumen durch eine Schicht mit einer gleichmäßigen Stärke gebildet. Dadurch wird beispielsweise der technische Vorteil erreicht, dass das Überschussvolumen auf einfache Weise entfernt werden kann.

In einer weiteren technisch vorteilhaften Ausführungsform des Verfahrens wird die Anfangsgeometrie durch Drucken oder Fräsen aus einem Rohling hergestellt und/oder das Überschussvolumen wird mit einem subtraktiven Verfahren hergestellt. Dadurch wird beispielsweise der technische Vorteil erreicht, dass die Anfangsgeometrie effizient hergestellt werden kann.

In einer weiteren technisch vorteilhaften Ausführungsform des Verfahrens ist der Rohling aus Zirkondioxid, Polymethylmethacrylat, Lithiumdisilikat oder Kobalt-Chrom gebildet. Dadurch wird beispielsweise der technische Vorteil erreicht, dass besonders geeignete Materialien verwendet werden.

In einer weiteren technisch vorteilhaften Ausführungsform des Verfahrens wird das Einbettmaterial in einen gefrästen Spalt zwischen der Anfangsgeometrie und dem Rohling eingefüllt. Dadurch wird beispielsweise der technische Vorteil erreicht, dass sich das Einbettmaterial im Spalt verteilen kann.

In einer weiteren technisch vorteilhaften Ausführungsform des Verfahrens wird zuerst ein Teil der Anfangsgeometrie hergestellt, der mit dem Einbettmaterial infiltriert wird und dann ein anderer Teil der Anfangsgeometrie hergestellt, der mit dem Einbettmaterial infiltriert wird. Dadurch wird beispielsweise der technische Vorteil erreicht, dass die dentale Restauration im Rohling gehalten werden kann.

In einer weiteren technisch vorteilhaften Ausführungsform des Verfahrens ist das Einbettmaterial durch ein Polymer, wie beispielsweise Polyethylenglycol, ein lichtgehärtetes Polymer, ein Wachs oder ein Tensid gebildet. Dadurch wird beispielsweise der technische Vorteil erreicht, dass besonders geeignete Einbettmedien verwendet werden.

In einer weiteren technisch vorteilhaften Ausführungsform des Verfahrens wird das Einbettmaterial durch Erhitzen der dentalen Restauration entfernt. Dadurch wird beispielsweise der technische Vorteil erreicht, dass das Einbettmaterial auf einfache Weise rückstandsfrei entfernt werden kann.

Gemäß einem zweiten Aspekt wird die technische Aufgabe durch eine Herstellungsvorrichtung zum Herstellen einer dentalen Restauration gelöst, mit einer Formgebungsvorrichtung zum Herstellen der dentalen Restauration in einer Anfangsgeometrie, die gegenüber der herzustellenden Endgeometrie ein Überschussvolumen aufweist; einer Infiltrationsvorrichtung zum Infiltrieren der Anfangsgeometrie mit einem Einbettmaterial; und einer Entfernungsvorrichtung zum Entfernen des Überschussvolumens mit dem Einbettmaterial, um die Endgeometrie zu erzeugen. Dadurch werden die gleichen technischen Vorteile, wie durch das Verfahren nach dem ersten Aspekt erreicht.

In einer technisch vorteilhaften Ausführungsform der Herstellungsvorrichtung umfasst die Herstellungsvorrichtung eine Aushärtungsvorrichtung zum Aushärten des Einbettmaterials. Dadurch wird beispielsweise der technische Vorteil erreicht, dass die Oberfläche der dentalen Restauration verbessert werden kann. Hierbei kann auch nur ein Teil der infiltrierten Schicht teilweise ausgehärtet sein, wie beispielsweise eine Aushärtung in der oberen Tiefe. Ist das Einbettmaterial mindestens bis über das Ende des Überschussvolumens ausgehärtet, entsteht der gewünschte Effekt an der Fräskante.

In einer weiteren technisch vorteilhaften Ausführungsform der Herstellungsvorrichtung umfasst die Aushärtungsvorrichtung eine Lichtquelle zum Aushärten des Einbettmaterials. Dadurch wird beispielsweise der technische Vorteil erreicht, dass das Einbettmaterial auf einfache Weise ausgehärtet werden kann.

In einer weiteren technisch vorteilhaften Ausführungsform der Herstellungsvorrichtung umfasst die Herstellungsvorrichtung eine Heizeinrichtung zum Entfernen des Einbettmaterials. Dadurch wird beispielsweise der technische Vorteil erreicht, dass das Einbettmaterial effizient entfernt werden kann.

In einer weiteren technisch vorteilhaften Ausführungsform der Herstellungsvorrichtung umfasst die Formgebungsvorrichtung eine Fräsvorrichtung. Dadurch wird beispielsweise der technische Vorteil erreicht, dass die dentale Restauration auf einfach Weise hergestellt werden kann.

Ausführungsbeispiele der Erfindung sind in den Zeichnungen dargestellt und werden im Folgenden näher beschrieben.

Es zeigen:
- Fig. 1: ein Blockdiagramm eines Verfahrens zum Herstellen einer dentalen Restauration; und
- Fig. 2: eine schematische Darstellung einer Herstellungsvorrichtung zum Herstellen der dentalen Restauration; und
- Fig. 3: eine perspektivische Ansicht eines Rings um einen Äquator der dentalen Restauration und Haltestege der dentalen Restauration.

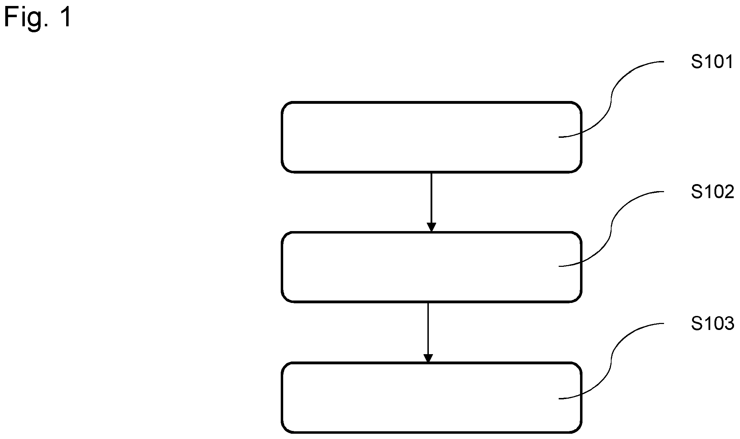

Fig. 1 zeigt ein Blockdiagramm eines Verfahrens zum Herstellen einer dentalen Restauration. In Schritt S101 wird die dentale Restauration in einer Anfangsgeometrie hergestellt, die gegenüber der herzustellenden Endgeometrie ein Überschussvolumen aufweist. Danach wird in Schritt S102 die Anfangsgeometrie mit einem Einbettmaterial infiltriert. Anschließend wird in Schritt S103 das Überschussvolumen mit dem Einbettmaterial entfernt, um die Endgeometrie zu erzeugen.

Um beispielsweise die Oberflächenqualität bei der Bearbeitung von porösem Zirkondioxid zu verbessern, wird die Anfangsgeometrie erst mit einem Überschussvolumen gefertigt und anschließend mit einem Einbettmaterial infiltriert. Das Überschussvolumen richtet sich danach, wie tief das Einbettmaterial in die Poren eindringt. Das minimale Überschussvolumen entspricht einer Schichtdicke von 0,02 mm bis 0,2 **mm,** vorzugsweise 0,05 mm (Schlichtverfahren), oder 0,1 oder 0,08 mm bis 2 mm (Schrubbverfahren), wobei auch andere Werte denkbar sind.

Zum Entfernen des Überschussvolumens kann anschließend ein Schlicht- oder Schrubbprozess ausreichend sein. Nachdem die zu bearbeitenden Flächen mit einem Überschussvolumen vorbearbeitet und mit dem Einbettmaterial infiltriert und ausgehärtet worden sind, wird das Polymer und das Restmaterial auf die Endgeometrie abgetragen. So kann zum einen eine glänzende Oberfläche gefräst werden und zum anderen lässt sich der Frässtaub, der aus einem Gemisch von Zirkondioxid und Polymer besteht, leichter abführen.

Die Rückstände des Einbettmaterials, die nicht von der dentalen Restauration getrennt werden, können anschließend in der Aufheizphase eines Sinterprozesses bei vorteilhafterweise 580°C bis 600°C in einer Heizeinrichtung 121 verbrannt werden. Vom Einspannen des Rohlings bis zur Bestückung des Sinterofens kann ein vollautomatischer Bearbeitungsprozess ohne Unterbrechung oder Interaktion mit dem Benutzer durchgeführt werden.

Das Infiltrations- oder Einbettmaterial ist zunächst fließfähig oder viskos für eine Infiltration der dentalen Restauration und anschließend fest für den Fräsprozess. Das Einbettmaterial umfasst beispielsweise eine organische Verbindung. Die eine organische Verbindung umfasst:
a) ein polymerisierbares Monomer und/oder eine Mischung von polymerisierbaren Monomeren, die flüssige, polymerisierbare Monomere umfasst, und/oder
b) Polymere, insbesondere Polymere der vorgenannten Monomere, und/oder
c) Wachs, insbesondere ein verflüssigbares Wachs, insbesondere ein unzersetzt verflüssigbares Wachs oder Tenside oder Polyethylenglycol. Als Wachs kommen beispielsweise Klebewachse, Fräs- und Universalwachse in Frage, wie insbesondere Paraffin enthaltende Wachse, dentalen Wachsen, insbesondere Paraffin, Zeresin, Karnaubawachs, Kakaobutter, Bienenwachs, Stearinsäure und/oder mikrokristalline, paraffinische Kohlenwasserstoffwachse.

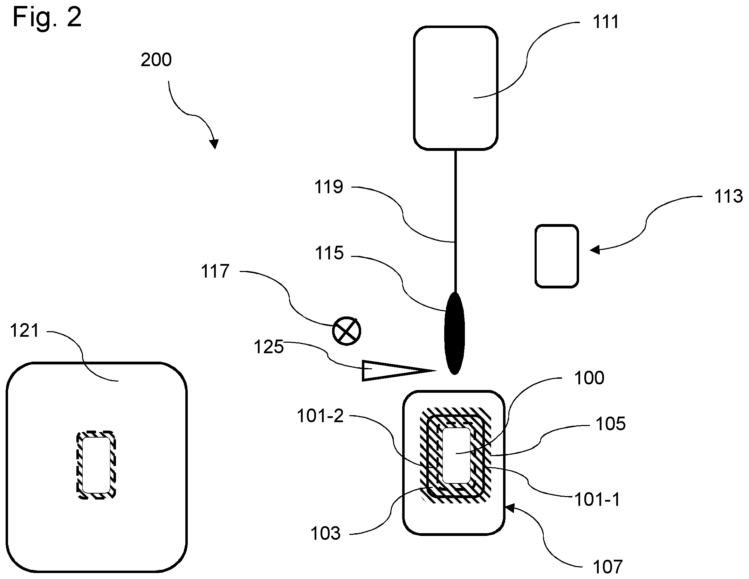

Fig. 2 zeigt eine schematische Darstellung einer Herstellungsvorrichtung 200 zum Herstellen der dentalen Restauration 100. Die Herstellungsvorrichtung 200 umfasst eine Formgebungsvorrichtung 111 zum Herstellen der dentalen Restauration 100 in einer Anfangsgeometrie 101-1, die gegenüber der herzustellenden Endgeometrie 101-2 ein Überschussvolumen 103 aufweist. Die Formgebungsvorrichtung ist beispielsweise durch eine Fräsvorrichtung mit einem Fräswerkzeug 119 gebildet.

Die Herstellungsvorrichtung 200 umfasst zusätzlich eine Infiltrationsvorrichtung 113 zum Infiltrieren der Anfangsgeometrie 101-1 mit einem Einbettmaterial 105. Beim Einbettprozess wird beispielsweise ein lichthärtendes Monomer als Einbettmaterial 105 verwendet. Dieses wird in einem Tank 123 an der Herstellungsvorrichtung 200 gespeichert und über eine Quetschpumpe zum Rohling 107 befördert.

Nachdem das Monomer in den Rohling 107 eingeführt wurde, wird eine Lichtquelle 117 mit UV-Licht als Aushärtungsvorrichtung aktiviert und der Aushärteprozess gestartet. Dies kann in mehreren Zyklen durchgeführt werden. Die Lichtquelle 117 befindet sich dabei in einem Fräsraum und verfügt über Lichtkontakt mit dem Rohling 107.

Das Fräswerkzeug 119 dient beispielsweise als Entfernungsvorrichtung 115 zum Entfernen des Überschussvolumens 103 mit dem Einbettmaterial 105, um die Endgeometrie 101-2 zu erzeugen. Über eine Düse 125 kann zudem ein Luftstrahl auf die Werkzeugspitze gelenkt werden. Dadurch verflüchtigt sich der entstehende Frässtaub, bevor sich dieser auf der dentalen Restauration 100 ablagern kann. Mit einem pulsierenden Druckluftstrahl kann dieser Effekt verstärkt werden.

Zudem kann die dentale Restauration 100 ohne Haltestege gefertigt werden, so dass eine manuelle Nacharbeit eliminiert wird. Dabei wird die dentale Restauration 100 erst auf der einen Seite oberhalb des Äquators mit einem Überschussvolumen hergestellt. Das entfernte Material wird mit einem lichthärtenden Monomer als Einbettmaterial 105 wiederaufgefüllt und durchhärtet.

Anschließend kann die Bearbeitung auf der Seite unterhalb des Äquators fortgesetzt werden. Nachdem auch diese Seite fertig bearbeitet ist, wird das meiste des zuvor eingegebenen Einbettmaterials 105 wieder abgetragen, sodass die dentale Restauration 100 an einem oder mehreren Haltestegen, die aus dem Einbettmaterial 105 bestehen gehalten werden kann.

Auch ein dünner Ring stellt eine geeignete Alternative zu den Haltestegen dar. Um eine automatisierte Einzelausgabe aus der Herstellungsvorrichtung 200 zu ermöglichen, können die Haltestege vom Rohling 107 getrennt werden, sodass die dentale Restauration 100 im freien Fall in einen Ausgabemechanismus fällt oder mittels eines Greifers entnommen wird.

Dabei ist der Bereich variabel, der mit einem Einbettmaterial 105 aufgefüllt wird. Die dentale Restauration 100 soll bei einem Durchstechen des Werkzeuges 119 jedoch über ausreichend Stabilität verfügen und vom Herausfallen oder Heraustrennen geschützt sein. Bereiche um den Äquator werden dafür mit ausreichend Einbettmaterial 105 befüllt. Die Füllhöhe vom Äquator aus gemessen entspricht dabei mindestens dem Werkzeugradius. Die Füllhöhe von der Fräsbahn aus gemessen, die üblicherweise unter dem Äquator liegt, entspricht mindestens dem Werkzeugdurchmesser. In diesem Fall ist auch bei einem Durchstechen des Werkzeuges 119 genügend Einbettmaterial 105 vorhanden, um Haltestege oder andere Stützgeometrien formen zu können, wie beispielsweise eine Scheibe.

Da die Wachsreste erst beim Sintern entfernt werden, können die Flächen, die von Wachs bedeckt sind, nicht mit dem Pinsel gereinigt werden. Wachsrückstände in der Kavität oder in den Fissuren sollten deshalb vermieden werden oder gemeinsam mit dem Überschussvolumen abgetragen werden.

Vorteilhaft wird die Kavität oder die Okklusion erst nach dem Einbettprozess gefräst. Danach liegen diese Flächen nach der maschinellen Fertigung frei zugänglich vor und können mit einem Pinsel oder anderweitig gereinigt werden.

Ein Entstehen von Staub kann mittels des Einbettmaterials auch an den Stellen minimiert werden, an denen kein Überschussvolumen vorgesehen ist. Hierbei sollten die Stellen der vorhandenen Endgeometrie beim Herstellverfahren abgesaugt, gepinselt oder abgeblasen werden. Werden auch diese Stellen infiltriert bzw. das Einbettmedium aufgebracht, ist es von Vorteil, wenn das Einbettmedium and Stellen der Endgeometrie zusammen mit dem Überschussvolumen in der Maschine abgetragen werden.

Die Menge an benötigtem Einbettmaterial 105 und die Einbettposition kann dabei über die CAM-Software bestimmt werden. Beim Einbettmaterial 105 handelt es sich um ein viskoses Monomer, das durch eine Belichtung zu einem festen Polymer wird. Im Sinterofen kann das Polymer restlos entfernt werden. Alternative Materialien sind Wachse oder Tenside. Diese sind in erwärmtem Zustand flüssig oder viskos und in abgekühltem Zustand fest.

Die Herstellungsvorrichtung 200 kann zudem eine Heizeinrichtung 121 zum Entfernen des Einbettmaterials 105 oder Sintern der dentalen Restauration 100 umfassen. Eine rückstandslose Verbrennung des Einbettmaterials 105 ist technisch vorteilhaft. Alternativ können (wasser-)lösliche Materialien zum Einsatz kommen, die sich vor dem Brennprozess von der Restauration abwaschen lassen. Im festen Zustand sollte das Einbettmaterial über ähnliche Fräseigenschaften verfügen wie der dentale Rohling 107.

Ist der Rohling 107 beispielsweise aus porösem Zirkondioxid, so werden die Fräskräfte bei der Bearbeitung des Einbettmaterials 105 nicht zu hoch, so dass Zirkondioxid nicht beschädigt werden kann. Wenn der Rohling 107 aus festem Werkstoff, wie Kobaltchrom oder Lithiumdisilikat gebildet ist, ist es vorteilhaft, wenn das Einbettmaterial 105 den hohen Fräskräften standhält und ähnliche Bearbeitungsparameter zulässt wie der Werkstoff des Rohlings 107.

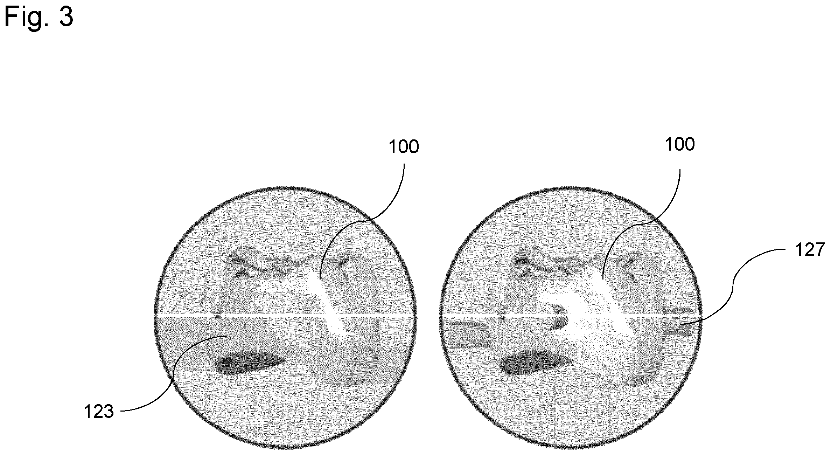

Fig. 3 zeigt eine perspektivische Ansicht eines Rings 123 um einen Äquator der dentalen Restauration 100 und Haltestege 127 der dentalen Restauration 100.

Die Haltestege 127 werden dabei nicht nur wie bei einem konventionellen Fräsprozess auf dem Äquator positioniert, sondern können auf einer Seite des Äquators positioniert werden, nämlich auf der Seite, auf der sich das Einbettmaterial befindet. Es sind auch alternative Geometrien zu einem klassischen Haltesteg 127 möglich. So kann die dentale Restauration 100 beispielsweise mit dem dünnen Ring 123 entlang, über oder unter dem Äquator an dem Rohling 107 gehalten werden.

Da keine Haltestege positioniert werden müssen, müssen die Fräsbahnen nicht dem Haltesteg ausweichen. Somit können abrupte Be- und Entschleunigungen entlang der Axialachse des Werkzeuges vermeiden werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentale Restauration
- 101-1: Anfangsgeometrie
- 101-2: Endgeometrie
- 103: Überschussvolumen
- 105: Einbettmaterial
- 107: Rohling
- 111: Formgebungsvorrichtung
- 113: Infiltrationsvorrichtung
- 115: Entfernungsvorrichtung
- 117: Aushärtungsvorrichtung
- 119: Fräswerkzeug/Werkzeug
- 121: Heizeinrichtung
- 123: Ring
- 125: Düse
- 127: Haltesteg

## Patentansprüche

1. Verfahren zum Herstellen einer dentalen Restauration (100), mit den Schritten:
- Herstellen (S101) der dentalen Restauration (100) in einer Anfangsgeometrie (101-1), die gegenüber der herzustellenden Endgeometrie (101-2) ein Überschussvolumen (103) aufweist;
- Infiltrieren (S102) der Anfangsgeometrie (101-1) mit einem Einbettmaterial (105); und
- Entfernen (S103) des Überschussvolumens (103) mit dem Einbettmaterial (105), um die Endgeometrie (101-2) zu erzeugen.

2. Verfahren nach Anspruch 1, wobei das Einbettmaterial (105) ausgehärtet wird.

3. Verfahren nach einem der vorangehenden Ansprüche, wobei Fräsreste beim Herstellen der Endgeometrie oder beim Entfernen des Überschussvolumens (103) abgesaugt, gepinselt oder abgeblasen werden.

4. Verfahren nach einem der vorangehenden Ansprüche, wobei das Überschussvolumen (103) durch eine Schicht mit einer gleichmäßigen Stärke gebildet wird.

5. Verfahren nach einem der vorangehenden Ansprüche, wobei die Anfangsgeometrie (101-1) durch Drucken oder Fräsen aus einem Rohling (107) hergestellt wird und/oder das Überschussvolumen (103) mit einem subtraktiven Verfahren hergestellt wird.

6. Verfahren nach Anspruch 5, wobei der Rohling (107) aus Zirkondioxid, Polymethylmethacrylat, Lithiumdisilikat oder Kobalt-Chrom gebildet ist.

7. Verfahren nach einem der Ansprüche 5 oder 6, wobei das Einbettmaterial (105) in einen gefrästen Spalt zwischen der Anfangsgeometrie (101-1) und dem Rohling (107) eingefüllt wird.

8. Verfahren nach einem der vorangehenden Ansprüche, wobei zuerst ein Teil der Anfangsgeometrie (101-1) hergestellt wird, der mit dem Einbettmaterial (105) infiltriert wird und dann ein anderer Teil der Anfangsgeometrie (101-1) hergestellt wird, der mit dem Einbettmaterial (105) infiltriert wird.

9. Verfahren nach einem der vorangehenden Ansprüche, wobei das Einbettmaterial (105) durch, ein Polymer, ein lichtgehärtetes Polymer, ein Wachs oder ein Tensid gebildet ist.

10. Verfahren nach einem der vorangehenden Ansprüche, wobei das Einbettmaterial (105) durch Erhitzen der dentalen Restauration (100) entfernt wird.

11. Herstellungsvorrichtung (200) zum Herstellen einer dentalen Restauration (100), mit:
- einer Formgebungsvorrichtung (111) zum Herstellen der dentalen Restauration (100) in einer Anfangsgeometrie (101-1), die gegenüber der herzustellenden Endgeometrie (101-2) ein Überschussvolumen (103) aufweist;
- einer Infiltrationsvorrichtung (113) zum Infiltrieren der Anfangsgeometrie (101-1) mit einem Einbettmaterial (105); und
- einer Entfernungsvorrichtung (115) zum Entfernen des Überschussvolumens (103) mit dem Einbettmaterial (105), um die Endgeometrie (101-2) zu erzeugen.

12. Herstellungsvorrichtung (200) nach Anspruch 11, wobei die Herstellungsvorrichtung (200) eine Aushärtungsvorrichtung (117) zum Aushärten des Einbettmaterials (105) umfasst.

13. Herstellungsvorrichtung (200) nach Anspruch 12, wobei die Aushärtungsvorrichtung eine Lichtquelle (117) zum Aushärten des Einbettmaterials (105) umfasst.

14. Herstellungsvorrichtung (200) nach einem der Ansprüche 11 bis 13, wobei die Herstellungsvorrichtung (200) eine Heizeinrichtung (121) zum Entfernen des Einbettmaterials (105) umfasst.

15. Herstellungsvorrichtung (200) nach einem der Ansprüche 11 bis 14, wobei die Formgebungsvorrichtung (111) eine Fräsvorrichtung umfasst.

## Claims

1. A method of producing a dental restoration (100), comprising the steps of:
- producing (S101) the dental restoration (100) in an initial geometry (101-1), which has an excess volume (103) compared to the final geometry (101-2) to be produced;
- infiltrating (S102) the initial geometry (101-1) with an investment material (105); and
- removing (S103) the excess volume (103) with the investment material (105) to create the final geometry (101-2).

2. The method according to claim 1, wherein the investment material (105) is cured.

3. The method according to any one of the preceding claims, wherein milling residues are sucked off, brushed or blown off when producing the final geometry or when removing the excess volume (103).

4. The method according to any one of the preceding claims, wherein the excess volume (103) is formed by a layer having a uniform thickness.

5. The method according to any one of the preceding claims, wherein the initial geometry (101-1) is produced from a blank (107) by printing or milling and/or the excess volume (103) is produced by a subtractive process.

6. The method according to claim 5, wherein the blank (107) is formed from zirconium dioxide, polymethyl methacrylate, lithium disilicate, or cobalt chromium.

7. The method according to any one of claims 5 or 6, wherein the investment material (105) is filled into a milled gap between the initial geometry (101-1) and the blank (107).

8. The method according to any one of the preceding claims, wherein a portion of the initial geometry (101-1) is first produced that is infiltrated with the investment material (105), and then another portion of the initial geometry (101-1) is produced that is infiltrated with the investment material (105).

9. The method according to any one of the preceding claims, wherein the investment material (105) is formed by a polymer, a light-cured polymer, a wax or a surfactant.

10. The method according to any one of the preceding claims, wherein the investment material (105) is removed by heating the dental restoration (100).

11. A production device (200) for producing a dental restoration (100), comprising:
- a shaping device (111) for producing the dental restoration (100) in an initial geometry (101-1) which has an excess volume (103) compared to the final geometry (101-2) to be produced;
- an infiltration device (113) for infiltrating the initial geometry (101-1) with an investment material (105); and
- a removal device (115) for removing the excess volume (103) with the investment material (105) to create the final geometry (101-2).

12. The production device (200) according to claim 11,
wherein the production device (200) comprises a curing device (117) for curing the investment material (105).

13. The production device (200) according to claim 12,
wherein the curing device comprises a light source (117) for curing the investment material (105).

14. The production device (200) according to any one of claims 11 to 13, wherein the production device (200) comprises a heating device (121) for removing the investment material (105).

15. The production device (200) according to any one of claims 11 to 14, wherein the shaping device (111) comprises a milling device.

## Revendications

1. Procédure de fabrication d'une restauration dentaire (100), comprenant les étapes suivantes :
- fabrication (S101) de la restauration dentaire (100) dans une géométrie initiale (101-1) qui présente un volume excédentaire (103) par rapport à la géométrie finale à fabriquer (101-2) ;
- infiltration (S102) de la géométrie initiale (101-1) avec un matériau d'enrobage (105) ; et
- élimination (S103) du volume excédentaire (103) avec le matériau d'enrobage (105) pour créer la géométrie finale (101-2).

2. Procédé selon la revendication 1, où le matériau d'enrobage (105) est durci.

3. Procédé selon l'une des revendications précédentes, où les résidus de fraisage sont aspirés, brossés ou soufflés lors de la production de la géométrie finale ou de l'élimination du volume excédentaire (103).

4. Procédé selon l'une des revendications précédentes, où le volume excédentaire (103) est formé par une couche d'épaisseur uniforme.

5. Procédé selon l'une des revendications précédentes, où la géométrie initiale (101-1) est produite par impression ou fraisage à partir d'une ébauche (107) et/ou le volume excédentaire (103) est produit par un procédé soustractif.

6. Procédé selon la revendication 5, où l'ébauche (107) est formée de zircone, de polyméthacrylate de méthyle, de disilicate de lithium ou de cobalt-chrome.

7. Procédé selon l'une des revendications 5 ou 6, où le matériau d'enrobage (105) est rempli dans un espace fraisé entre la géométrie initiale (101-1) et l'ébauche (107).

8. Procédé selon l'une des revendications précédentes, où d'abord une partie de la géométrie initiale (101-1) qui est infiltrée avec le matériau d'enrobage (105) est fabriquée, puis une autre partie de la géométrie initiale (101-1) qui est infiltrée avec le matériau d'enrobage (105) est fabriquée.

9. Procédé selon l'une des revendications précédentes, où le matériau d'enrobage (105) est constitué d'un polymère, d'un polymère photopolymérisé, d'une cire ou d'un tensioactif.

10. Procédé selon l'une des revendications précédentes, où le matériau d'enrobage (105) est éliminé par chauffage de la restauration dentaire (100).

11. Dispositif de fabrication (200) pour la réalisation d'une restauration dentaire (100), contenant :
- un dispositif de moulage (111) pour la production de la restauration dentaire (100) dans une géométrie initiale (101-1) qui présente un volume excédentaire (103) par rapport à la géométrie finale à produire (101-2) ;
- un dispositif d'infiltration (113) pour infiltrer la géométrie initiale (101-1) avec un matériau d'enrobage (105) ; et
- un dispositif d'élimination (115) pour éliminer le volume excédentaire (103) avec le matériau d'enrobage (105) afin de créer la géométrie finale (101-2).

12. Dispositif de fabrication (200) selon la revendication 11, où le dispositif de fabrication (200) comprend un dispositif de durcissement (117) pour durcir le matériau d'enrobage (105).

13. Dispositif de fabrication (200) selon la revendication 12, où le dispositif de polymérisation comprend une source lumineuse (117) pour durcir le matériau d'enrobage (105).

14. Dispositif de fabrication (200) selon l'une des revendications 11 à 13, où le dispositif de fabrication (200) comprend un dispositif de chauffage (121) pour enlever le matériau d'enrobage (105).

15. Appareil de fabrication (200) selon l'une des revendications 11 à 14, où l'appareil de formage (111) comprend un dispositif de fraisage.
